Europäisches Patentamt

European Patent Office

Office européen des brevets

(19)

(11) Numéro de publication: **0 064 304**

**A1**

# DEMANDE DE BREVET EUROPEEN

(12)

(21) Numéro de dépôt: **82200089.9**

(22) Date de dépôt: **26.01.82**

(51) Int. Cl.³: **B 60 P 1/46**

(30) Priorité: **15.04.81 BE 2059117**

(43) Date de publication de la demande:
**10.11.82 Bulletin 82/45**

(84) Etats contractants désignés:
**DE FR GB LU NL**

(71) Demandeur: **Nuyts, Carolus**
**Steenweg op Mol 175**
**B-2360 Oud-Turnhout(BE)**

(71) Demandeur: **Nuyts, Gustaaf**
**Steenweg op Mol 177**
**B-2360 Oud-Turnhout(BE)**

(71) Demandeur: **Nuyts, Ludovicus**
**Domin Bauwenstraat 10**
**B-2360 Oud-Turnhout(BE)**

(71) Demandeur: **Nuyts, Henri**
**Bloemstraat 8**
**B-2470 Retie(BE)**

(72) Inventeur: **Nuyts, Carolus**
**Steenweg op Mol 175**
**B-2360 Oud-Turnhout(BE)**

(72) Inventeur: **Nuyts, Gustaaf**
**Steenweg op Mol 177**
**B-2360 Oud-Turnhout(BE)**

(72) Inventeur: **Nuyts, Ludovicus**
**Domin Bauwenstraat 10**
**B-2360 Oud-Turnhout(BE)**

(72) Inventeur: **Nuyts, Henri**
**Bloemstraat 8**
**B-2470 Retie(BE)**

(74) Mandataire: **Ottelohe, Jozef René**
**Bureau Ottelohe J.R. Postbus 3 Fruithoflaan 105**
**B-2600 Antwerpen (Berchem)(BE)**

(54) **Dispositif de levage pour camions.**

(57) Dispositif de levage pour camions, qui, entre le sol et le plancher de chargement d'un camion ou plus haut, est déplaçable en hauteur et qui, en position verticale d'évitage, peut fermer l'extrémité ouverte du camion.

Les moyens pour déplacer la plate-forme en hauteur se composent de deux cylindres hydrauliques (11) fixés de manière pivotante entre les deux côtés latéraux de la plate-forme (12) et bâti du camion, où entre les cylindres (11) et une pompe hydraulique (26) servant à les alimenter, est prévu un régulateur de débit (25) pour répartir uniformément le liquide entre les deux cylindres (11) et assurer ainsi leur fonctionnement uniforme.

Fig.1

- 1 -

## Dispositif de levage pour camions

L'invention a pour objet un dispositif de levage pour camions, à savoir un dispositif de levage qui, entre le sol et le plancher de chargement d'un camion ou plus haut, est déplaçable en hauteur et qui, en position verticale d'évitage, peut fermer l'extrémité ouverte du camion.

On connaît des dispositifs de levage, se composant en ordre principal d'une plate-forme de chargement, placée tout contre l'extrémité arrière ouverte du camion, de moyens comportant des chaînes ou des câbles, pour déplacer en hauteur la plate-forme de chargement entre le sol et le plancher de chargement d'un camion ou pour le déplacer plus haut, et de moyens de guidage pour guider la plate-forme de chargement pendant le déplacement de celle-ci.

Les moyens ici utilisés, pour déplacer en hauteur la plate-forme de chargement présentent toutefois l'inconvénient d'être relativement compliqués et d'une construction coûteuse. Ils peuvent en outre se déranger facilement en service.

Pour obvier à ces inconvénients, les moyens pour déplacer en hauteur la plate-forme de chargement, se composent de deux cylindres hydrauliques d'une longueur de course de préférence grande, lesquels cylindres sont fixés de manière pivotante entre chaque côté latéral de la plate-forme de chargement et la partie fixe du camion, tandis qu'entre les cylindres et une pompe hydraulique utilisée pour alimenter les cylindres susnommés, il est prévu un régulateur de débit permettant de répartir d'une manière uniforme le liquide sur les deux cylindres pour que le mouvement de ceux-ci soit uniforme. La plate-forme de chargement est donc directement attaquée par les cylindres hydrauliques, sans l'intervention d'organes de transmission. La perte de puissance est ainsi limitée, un effort moindre est nécessaire et le rendement est plus élevé.

A titre d'exemple, ne présentant aucun caractère limitatif, il sera décrit ci-après, d'une manière plus détaillée, une forme choisie d'exécution dudit dispositif de levage, conforme à l'invention. Cette description se réfère aux dessins ci-annexés dans lesquels :
- la fig. 1 est une vue latérale du dispositif de levage;
- la fig. 2 est une vue avant de ce dispositif;
- la fig. 3 est une vue de détail, montrant la partie inférieure dudit dispositif;
- la fig. 4 est une vue en coupe, suivant la ligne IV-IV, de la fig. 3.

Dans ces figures, on remarque que, tout contre la face arrière du camion A, il est fixé deux profilés de guidage 1 parallèles en position debout et d'une section transversale de préférence carrée. Dans chaque profilé de guidage 1, il est placé une latte 4 sur laquelle il est fixé une fourrure 2 en matière plastique, cela au moyen de boulons 5 dont la tête et l'écrou sont placés de manière à être noyés dans les creux 6 de ladite fourrure. Cette fourrure peut se déplacer en hauteur avec la latte, dans le profilé de guidage 1. Dans chaque profilé de guidage 1, il est prévu une fente longitudinale 3, traversée par la latte qui se prolonge à l'extérieur du profilé. Sur chaque latte 4, il est soudé une oreille 7 traversée par un axe 8. Autour de cet axe, il est suspendu une des extrémités de deux supports d'axe 9, dont les autres extrémités sont accouplées de manière pivotante à un cylindre hydraulique 11 d'une course de grande longueur. Ces deux supports d'axe font partie de la plate-forme de chargement 12 composée de profilés appropriés et sur lesquels il est encore prévu un nez vertical fixe 13. Dans chaque cylindre hydraulique 11, il est logé un piston 14 avec tige de piston 15 dans laquelle il est prévu un canal axial 16 qui, par l'intermédiaire d'une ou plusieurs ouvertures latérales 17 prévues dans la paroi de la tige de piston 15, débouche dans l'espace intérieur du cylindre hydraulique 11, lequel espace intérieur est situé au-dessus du piston. Tout au-dessus, chaque tige de piston 15 est fixée de manière pivotante par un axe 18 au profilé de guidage 1 correspondant. Chaque canal axial 16 est raccordé à une pompe hydraulique 26 montée sur le camion, au moyen d'un tuyau souple 19 via un régulateur de débit 25 qui sert à répartir l'huile d'une manière uniforme sur les deux cylindres. Grâce à cette disposition, les deux cylindres fonctionnent exactement de la même manière, de sorte que les deux côtés latéraux de la plate-forme de chargement se déplacent en hauteur en restant parfaitement parallèles. Les dérangements sont aisi évités. Autour de l'axe 8 d'une des lattes 4, il est suspendu un nez pivotable 20, qui, dans la position reproduite à la fig. 3, est tenu par le plan 21 du nez qui repose contre la butée 22, prévue sur la plate-forme de chargement 12. Ce nez pivotable 20 peut fonctionner avec une butée fixe 23 qui est fixée sur le profilé de guidage 1, ceci étant réalisé pour amener en position verticale la plate-forme de chargement. Les nez fixes 13 prévus sur les deux faces latérales de la plate-forme de chargement 12 fonctionnent chacun avec une butée terminale 24, prévue sur chaque profilé de guidage 1 et servent à limiter dans la position verticale, la course de la plate-forme de chargement.

Le fonctionnement du dispositif de levage est décrit ci-après.

Pour amener la plate-forme de chargement 12 sur le sol, la pompe hydraulique 25, montée sur le camion, est mise en service de telle manière que l'huile soit extraite des cylindres hydrauliques 11 par pompage via le régulateur de débit 25, le canal axial 16 et l'ouverture 17 de chaque tige de piston 15. Le régulateur de débit 25 veille alors à ce que les cylindres 11 soient uniformément vidés par pompage. Le poids de la plate-forme de chargement 12, celui des pièces montées sur cette plate-forme et celui des cylindres hydrauliques 11, permettent à ces cylindres de descendre en glissant sur les pistons 14 de sorte que la plate-forme de chargement 12 descend sur le sol tandis que les lattes 4 avec les fourrures 2 qui se déplacent en hauteur dans les profilés de guidage 1, guident la plate-forme de chargement. Pour déplacer la plate-forme de chargement horizontalement vers le haut, cela de manière à la faire arriver au niveau du plan de chargement B du camion A, on fait tourner le nez pivotable 20 sur 180° environ autour de l'axe 8, comme on le voit en ligne points-barres dans la fig. 3, puis on met en service la pompe hydraulique 26 et le régulateur de débit 25, monté sur le camion. On pompe ainsi dans l'espace intérieur des cylindres hydrauliques 11 l'huile sous pression via les tuyaux flexibles 19, le canal axial 16 et l'ouverture 17 de chaque tige de piston 15, cela de telle manière que les cylindres 11 soient pressés uniformément vers le haut sur les pistons 14. Ainsi ces cylindres tirent vers le haut la plate-forme de chargement 12 qui s'élève en restant parfaitement horizontale, tandis que les lattes 4 avec les fourrures 2 sont guidées dans les profilés de guidage 1. Lorsque le niveau du plan de chargement B est atteint par la plate-forme de chargement 12, la pompe hydraulique 25

et le régulateur de débit 25 sont mis hors circuit de sorte que tout le mécanisme s'arrête. Si on le désire, la plate-forme de chargement peut également être déplacée plus haut.

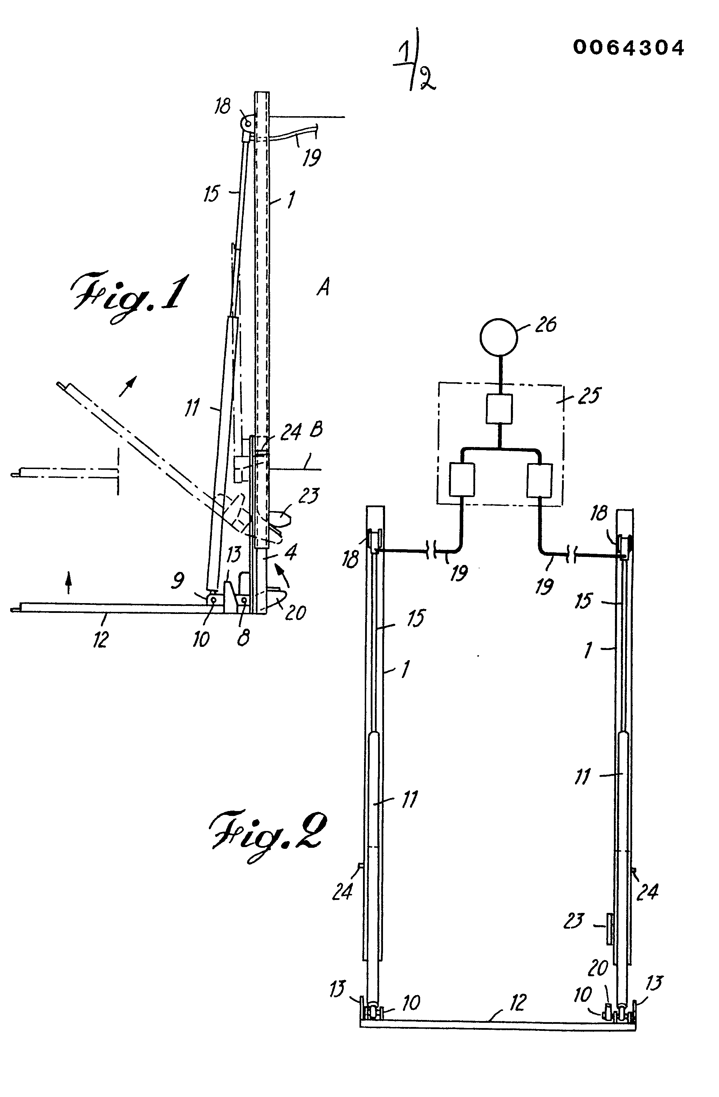

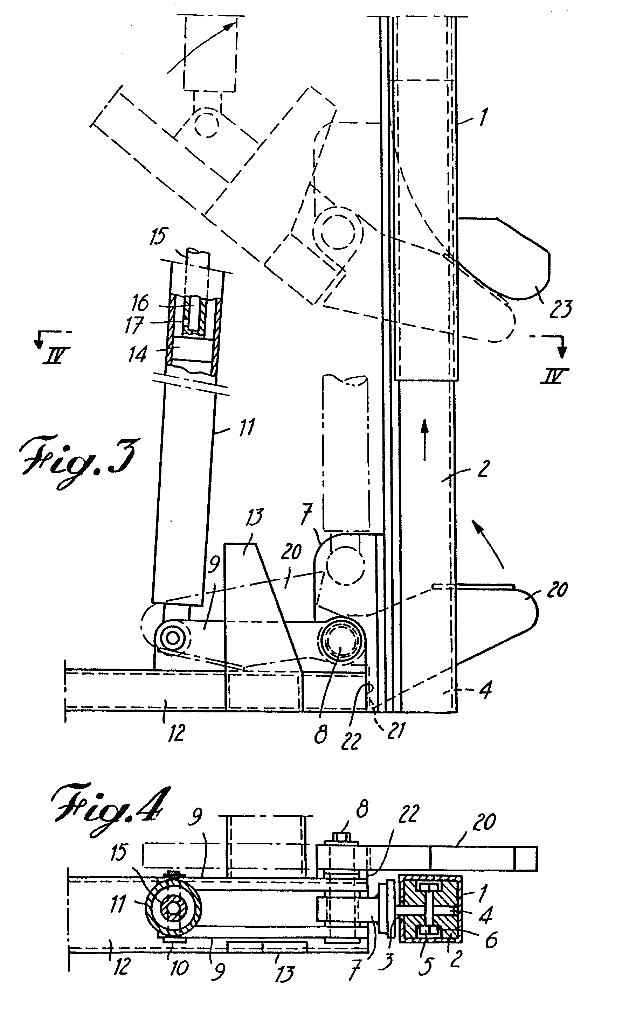

Pour amener en position verticale, la plate-forme de chargement 12 et pour fermer éventuellement l'espace de chargement du camion A, comme le montre la fig. 1 au moyen de lignes points-barres, on fait tourner autour de l'axe 8 le nez pivotable 20, de telle manière que celui-ci se mette dans la position montrée en traits pleins dans les figures 1, 3, 4. La pompe hydraulique 26 et le régulateur de débit 25, monté sur le camion, sont mis en service. Ces opérations permettent de pomper l'huile d'une manière uniforme, dans l'espace intérieur des cylindres 11, de sorte que les cylindres s'élèvent en glissant d'une manière uniforme sur les pistons 14, tandis que la plate-forme 12 est entraînée avec les cylindres et s'élève tout en restant parfaitement horizontale. Lorsque le nez pivotable 20 atteint la butée fixe 23, le nez 20 et la plate-forme de chargement 12 pivotent autour de l'axe 8 (fig. 1 - position intermédiaire indiquée en lignes points-barres), tandis que la plate-forme de chargement monte toujours et est amenée en position verticale. Lorsque les nez fixes 13 viennent ensuite en contact avec les butées terminales 24, le dispositif tout entier s'arrête et l'espace de chargement ouvert du camion, se ferme complètement.

Il va de soi que la forme et les dimensions des pièces ci-avant décrites peuvent différer de même que leur montage mutuel, cela à condition de rester dans le cadre de l'invention. Il va également sans dire que des pièces bien déterminées pourraient être remplacées par d'autres à la même fin. Comme le montre la fig. 1, en lignes points-barres, chaque cylindre hydraulique 11 peut être aussi couplé à l'oreille 7 de manière pivotante, au lieu d'être couplé aux supports l'axe 9

REVENDICATIONS

1.- Dispositif de levage pour camions, constitué principalement d'une plate-forme de chargement (12) fermant l'extrémité ouverte du camion, de moyens pour déplacer verticalement la plate-forme entre le sol et le plateau de chargement du camion ou plus haut, et de moyens pour le guidage de la plate-forme pendant son mouvement, caractérisé par le fait que les moyens pour déplacer la plate-forme en hauteur se composent de deux cylindres hydrauliques (11) fixés de manière pivotante entre les deux côtés latéraux de la plate-forme (12) et le bâti du camion où entre les cylindres (11) et une pompe hydraulique (26) servant à les alimenter, est prévu un régulateur de débit (25) pour répartir uniformément le liquide entre les deux cylindres (11) et assurer ainsi leur fonctionnement uniforme.

2.- Dispositif de levage selon la revendication 1, caractérisé par le fait que la tige de piston (15) de chacun des deux cylindres hydrauliques (11) comporte un canal axial (16) qui, d'une part, est relié à un régulateur de débit (25) raccordé à la pompe hydraulique (26), et d'autre part, débouche dans la chambre qui surmonte le piston (14) dans chaque cylindre (11).

3.- Dispositif de levage selon la revendication 1, caractérisé par le fait que la plate-forme (12) est capable de basculer entre une position horizontale et verticale et est suspendue d'une manière pivotante à deux lattes (4) qui coulissent à l'intérieur de deux profilés de guidage (1) fixés au camion, où le point d'application de chacun des cylindres (11) à la plate-forme (12) se trouve à la proximité /des points d'articulation de la plateforme.

..- Dispositif de levage selon la revendication 3, caractérisé par le fait que chaque profilé de guidage (1) présente une coupe transversale carrée et que chaque latte (4) est fixée dans une fourrure (2) en matière synthétique, laquelle est déplaçable en hauteur avec la latte à l'interieur du profilé de guidage correspondant (1), où chaque latte (4) traverse une fente longitudinale (3) pratiquée en hauteur dans le profilé de guidage (1).

5.- Dispositif de levage selon la revendication 3, caracterisé par le fait qu'à l'un des axes (8) de la plate-forme (12) est suspendu un nez (20) pivotant sur environ 180° et coopérant d'une part avec la plate-forme de chargement (12) et d'autre part avec une butée fixe (23) pour amener la plate-forme de chargement à la verticale pendant son mouvement vers le haut et fermer le bac de chargement du camion.

6.- Dispositif de levage selon la revendication 3, caractérisé par le fait que la plate-forme de chargement (12) est pourvue d'au moins un nez fixe (13) coopérant dans la position verticale de la plate-forme de chargement avec une butée terminale (24) disposée sur le bâti du camion, pour limiter le déplacement en hauteur de la plate-forme de chargement.

*Fig.1*

*Fig.2*

Fig.3

Fig.4

# RAPPORT DE RECHERCHE EUROPEENNE

**Office européen des brevets**

**0064304**
Numéro de la demande

EP 82 20 0089

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | BE-A- 736 114 (FIRMAN) <br> * page 8, paragraphe 2 à page 9; page 6, paragraphe 1 * <br> --- | 1,3,4 | B 60 P 1/46 |
| X | LU-A- 52 002 (PLANET) <br> * en entier * <br> --- | 1 | |
| X | GB-A-2 024 767 (RATCLIFF) <br> * en entier * <br> --- | 1,3 | |
| A | GB-A-1 421 552 (VAN GEMERT) <br> * en entier * <br> --- | 5 | |
| A | US-A-4 138 023 (ROHRS) <br> * en entier * <br> --- | 5 | |
| A | US-A-2 418 494 (ANTHONY) <br> * en entier * <br> --- | 1,3,5 | DOMAINES TECHNIQUES RECHERCHES (Int. Cl. ³) <br><br> B 60 P 1/46 <br> A 61 G 5/00 |
| A | BE-A- 876 399 (SOLID) <br> * figure * <br> --- | 1,3 | |
| A | US-A-3 918 596 (WARD) <br> ----- | | |

Le présent rapport de recherche a été établi pour toutes les revendications

| Lieu de la recherche <br> LA HAYE | Date d'achèvement de la recherche <br> 16-07-1982 | Examinateur <br> SCHMITTER J.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82